# EUROPEAN PATENT APPLICATION

(11) **EP 2 362 306 A1**
(43) Date of publication of application: **31.08.2011**
(21) Application number: 09756123.7
(22) Date of filing: 11.05.2009
(51) Int. Cl.: G06F 9/44

(54) **METHOD AND SERVER FOR WIDGET COMMUNICATION**

(71) Applicant: Huawei Software Technologies Co., Ltd., Nanjing, Jiangsu 210012 (CN)
(72) Inventor: The designation of the inventor has not yet been filed
(74) Representative: Charles, Glyndwr
(86) International application number: PCT/CN2009/071726
(87) International publication number: WO 2010/130078

(57) **Abstract**

A widget communication method includes: receiving a widget event message from a client, the widget event message indicates happening of the widget event; obtaining association information of widget events between clients; and triggering widget events on other clients that are associated with the widget event happening on the client according to the association information. A widget server is also provided. With the present invention, when a server receives a widget event message from a client, the server obtains association information of widget events between clients. Because the association information of widget events between clients associates widget events of different clients, the server triggers the widget events on other clients that are associated with the widget event happening on the client according to the association information so that widget applications can collaborate across multiple clients.

## Description

### FIELD OF THE INVENTION

The present disclosure relates to communication technologies, and in particular, to a method and a server for widget communication.

### BACKGROUND OF THE INVENTION

According to the definition by the World Wide Web Consortium (W3C), a widget is a small web program for client use that displays and updates local or remote data and is usually packed into one file and downloaded and installed by a client device. Widget related technologies are basically about the web field, such as Hyper Text Markup Language (HTML), Cascading Style Sheets (CSS), JavaScript (JS), Extensible Markup Language (XML) and Document Object Model (DOM), where HTML is for page layout, CSS for style control, and JS for provision of dynamic behaviors.

Normally, in the development of a widget, the following files may be created: HTML file, CSS file, JS file, XML configuration file, and image resource file. When all the files are created, the files are packed into one compressed package (such as a ZIP file) and the file type is changed to a special type, such as *.wgt, or *.widget. Finally, the package is released for download. Normally, a widget can complete one task independently, for example, viewing weather information, reading news, and browsing images. After a widget user finds a widget application file and downloads it to a local directory, the user can run the application directly to satisfy the user requirement without extra work. However, this can meet only simple user requirements.

In a widget structure according to a conventional art, a widget client runs a widget engine to parse and execute a widget application file and a widget server acts on behalf of the client to obtain data or services from a third-party resource.

In the process of implementing the present invention, the inventor finds at least the following defects in the conventional art:

The widget structure in the conventional art only meets simple user requirements; it cannot meet complex requirements in scenarios where multiple widget applications are required to collaborate.

### SUMMARY OF THE INVENTION

Embodiments of the present invention provide a widget communication method and server so that widget applications can collaborate across multiple devices.

A widget communication method includes:
receiving a widget event message from a client, where the widget event message indicates happening of the widget event;
obtaining association information of widget events between clients; and
triggering widget events on other clients that are associated with the widget event happening on the client according to the association information.

A widget server includes:
a receiving unit, adapted to receive a widget event message from a client, where the widget event message indicates happening of the widget event;
an obtaining unit, adapted to obtain association information of widget events between clients; and
a triggering unit, adapted to trigger widget events on other clients that are associated with the widget event happening on the client according to the association information.

In the embodiments of the present invention, when the server receives a widget event message from a client, the server obtains the association information of widget events between clients. Because the association information of widget events between clients associates widget events of different clients, the server triggers the widget events on other clients that are associated with the widget event happening on the client according to the association information so that widget applications can collaborate across multiple clients.

### BRIEF DESCRIPTION OF THE DRAWINGS

To make the technical solution under the present invention clearer, the accompanying drawings for illustrating the embodiments of the present invention or illustrating the prior art are outlined below. Evidently, the accompanying drawings are exemplary only, and those skilled in the art can derive other drawings from such accompanying drawings without creative work.
FIG 1 is a flowchart of a widget communication method according a first embodiment of the present invention;
FIG. 2 is a flowchart of a widget communication method according a second embodiment of the present invention;
FIG. 3 shows a structure of a widget communication system according to the first embodiment of the present invention; and
FIG. 4 shows a structure of a widget communication system according to the second embodiment of the present invention.

### DETAILED DESCRIPTION OF THE INVENTION

To make the technical solution, objectives and merits of the present invention clearer, the following describes the embodiments of the present invention in detail with reference to accompanying drawings. It is understandable that the embodiments described hereinafter are only for explaining the objectives of the present invention and are not intended to limit the present invention.

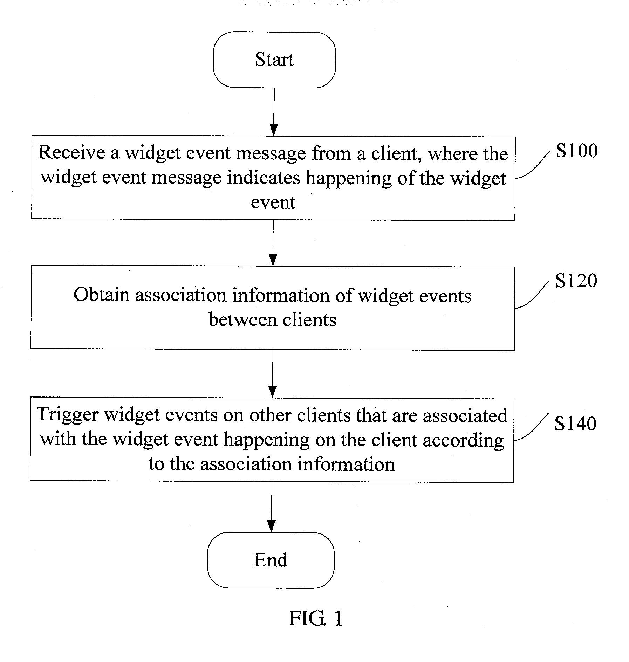

FIG. 1 is a flowchart of a widget communication method according to the first embodiment of the present invention. The method includes:
S 100. Receive a widget event message from a client, where the widget event message indicates happening of the widget event.

The widget event includes a widget engine event and a widget application event. The widget engine event is defined as a signal initiated by a widget engine; for example, the widget engine controls the show or hide of a widget application icon, or the widget engine is going online, offline or exceptional. The widget application event is defined as a signal initiated by a widget application, for example, opening, shutdown or exception of a widget application, or change of a code variable in a widget application.

When a widget application happens at a client, the widget engine controls the widget icon to be shown, and the client sends a widget event message indicating that the widget icon has been shown to a server, and the server receives the widget event message from the client. Suppose the client is a DVD enabled TV set. When the widget application of DVD play happens at the TV set, the DVD play widget icon is shown and a widget event message indicating the DVD play widget icon is shown is sent to the server.

S 120. Obtain association information of widget events between clients.

The association information of widget events means associations of widget events between clients. The associations can be stored in the server in the form of a configuration file and the server parses the configuration file to obtain the association information of widget events. Optionally, the configuration file is stored in a storage device independent of the server, and the server obtains the configuration file from the storage device when necessary and parses the configuration file to obtain the association information of widget events. It is understandable that the apparatus that stores and parses the configuration file is not limited to a server. It may also be another apparatus that is capable of storing and parsing the configuration file, such as a workstation and a personal computer.

It is understandable that the association information of widget events may also be present in the widget event message in step S100 and the server extracts the association information of widget events from the widget event message upon reception of the widget event message from the client.

In this embodiment, a configuration file is taken as an example to explain the step of obtaining the association information of widget events between clients. The association configuration file is stored in the server in advance, where a widget user may define widget applications running on every client (TV, sound, light, mobile phone, digital photo frame, and so on) and the association information between the widget applications according to the user requirement, such as association information between widget events of the widget applications. The association of the widget event may be an association between an engine event and another engine event, an association between an engine event and an application event, or an association between an application event and another application event, or an association between an application event and an engine event, or an association between an engine event and a combination of engine and application events, or an association between an application event and a combination of engine and application events.

The widget event associations may be defined by manually compiling a widget script file such as linked.xml, or associations between widget applications can be defined by means of tables. The association information of widget events between clients is uploaded to the server via the association configuration file. An exemplary association configuration file is as follows:

```
         If(DVDOnTV_widget.show //engine event)
         {
           SoundOnTV_widget.show; //engine event
           LightOnTV_ widget.open; //application event
         }
         If(DVDOnTV_widget.hide //engine event)
         {
           SoundOnTV_widget. hide; //engine event
           LightOnTV_ widget. hide; // engine event
         }
         If(CallNoteOnMobile_widget.open //application event)
         {
           CallNoteOnTV_widget.show; //engine event
           PhotosOnPhotoframe_widget.open; //application event
         }
         If(CallNoteOnMobile_widget.answer //application event)
         {
           CallNoteOnTV_widget.hide; //engine event
         }
        If(CallNoteOnMobile_widget.close //application event)
        {
           PhotosOnPhotoframe_widget.close; //application event
        }
```

XOnY_widget indicates widget application X that runs on client Y DVDOnTV_widget is a DVD play widget application running on the client (TV) and SoundOnTV_widget and LightOnTV_widget in association with DVDOnTV_widget are sound and light widget applications running on the client (TV).

In the configuration file, DVDOnTV_widget.show is an engine event of DVDOnTV_widget, indicating the icon of DVDOnTV_widget is shown. Associated with the engine event of DVDOnTV_widget are the engine event SoundOnTV_widget.show of SoundOnTV_widget and the application event LightOnTV_widget.open of LightOnTV_widget.

CallNoteOnMobile_widget.open is an application event of CallNoteOnMobile_widget, indicating the CallNoteOnMobile_widget application is opened. Associated with CallNoteOnMobile_widget.open are the engine event CallNoteOnTV_widget.show of CallNoteOnTV_widget and the application event PhotosOnPhotoframe_widget.open of PhotosOnPhotoframe_widget.

CallNoteOnMobile_widget.answer is an application event of CallNoteOnMobile_widget, indicating a user answers a call on a mobile phone. Associated with CallNoteOnMobile_widget.answer is the engine event CallNoteOnTV_widget.hide of CallNoteOnTV_widget.

S 140. Trigger the widget events on other clients that are associated with the widget event happening on the client according to the association information.

For example, when the server receives a widget event message of DVDOnTV_widget.show from the client (TV), the server triggers the widget engine event SoundOnTV_widget.show and widget application event LightOnTV_ widget.open on other clients associated with the engine event DVDOnTV_widget.show according to the association information obtained by parsing the configuration file. Particularly, when the DVDOnTV_widget icon is shown, the SoundOnTV_widget icon is also shown and the LightOnTV_widget application is opened.

When the server receives a widget event message of CallNoteOnMobile_widget.open from the client (mobile phone), the server triggers the widget engine event CallNoteOnTV_widget.show and application event PhotosOnPhotoframe_widget.open on other clients associated with CallNoteOnMobile_widget.open according to the association information obtained by parsing the configuration file. Particularly, when the CallNoteOnMobile_widget application is opened on the mobile phone, the CallNoteOnMobile_widget icon is shown on the TV and the PhotosOnPhotoframe_widget application is opened, for example, showing a photo of the caller.

When the server receives a widget event message of CallNoteOnMobile_widget.answer from the client (mobile phone), the server triggers the widget engine event CallNoteOnTV_widget.hide on other clients associated with CallNoteOnMobile_widget.answer according to the association information obtained by parsing the configuration file. Particularly, when the mobile user answers the call, the CallNoteOnMobile_widget icon is hidden from the TV.

In this embodiment, when the server receives a widget event message from a client, the server obtains the association information of widget events between clients. Because the association information of widget events between clients associates widget events of different clients, the server triggers the widget events on other clients that are associated with the widget event happening on the client according to the association information so that widget applications can collaborate across multiple clients.

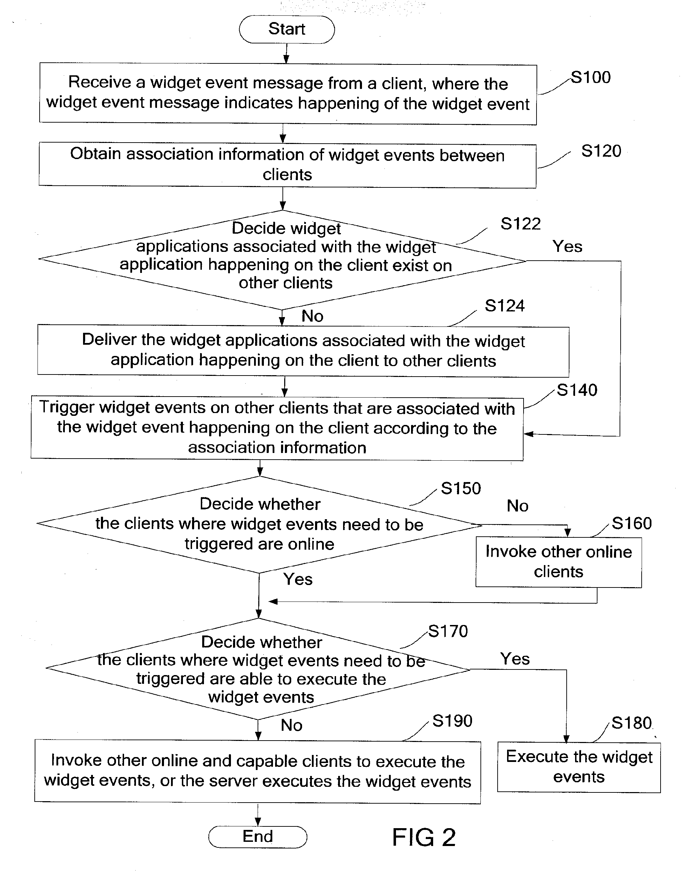

FIG. 2 is a flowchart of a widget communication method according the second embodiment of the present invention, which is similar to the widget communication method in the first embodiment but differs in that the method in the second embodiment further includes a step of deciding whether widget applications associated with the widget application happening on the client exist on other clients. Specifically, the method in the second embodiment includes:
S 100. Receive a widget event message from a client, where the widget event message indicates happening of the widget event.
S120. Obtain association information of widget events between clients.
S 122. Detect whether there are widget applications on other clients that are associated with the widget application happening on the client. If associated widget applications exist on other clients, go to step 140, or else proceed to step 124.
S124. Deliver the widget applications associated with the widget application happening on the client to other clients.

When it is detected in step 122 that there are no widget applications on the other clients associated with the widget application happening on the client, the other clients may send a widget application download request to the server and the server sends the requested widget applications to the other clients. Optionally, the server may push the required widget applications to the other clients.

S 140. Trigger the widget events on other clients that are associated with the widget event happening on the client according to the association information.

S150. Detect whether the clients where widget events need to be triggered are online, or whether these clients are available; if the clients are not online, proceed to step 160 or else go to step 170.

S160. Invoke other online clients. If the clients where widget applications need to be triggered are detected as not online in step 150, the server invokes other online clients to execute the widget applications.

S 170. Detect whether the clients where widget events need to be triggered are able to execute the applications; if they are able to do so, proceed to step 180 or else go to step 190.

Capabilities of client devices are not the same; for example, a low-end device (like a digital photo frame) is unable to run widget events of a widget application. Therefore, in the case that a low-end device is unable to run a widget event that the servers need to trigger, the server must invoke another client that is able to execute the widget event.

S 180. Execute the widget events.

S190. Invoke other online and capable clients to execute the widget events, or the server executes the widget events.

For example, the widget application event PhotosOnPhotoframe_widget.open should be run on the digital photo frame but the server finds that the digital photo frame is too weak to run the event. In this case, the server may choose to run the widget application event on a digital TV set. Optionally, the server may invoke another virtual widget executing unit to execute the widget application event.

In this embodiment, when the server receives a widget event message from a client, the server obtains the association information of widget events between clients. Because the association information of widget events between clients associates widget events of different clients, the server triggers the widget events on other clients that are associated with the widget event happening on the client according to the association information so that widget applications can collaborate across multiple clients.

When the server detects that widget applications associated with the widget application happening on the client do not exist on the other clients, the server may deliver the associated widget applications to the other clients so that widget applications on the clients are normally triggered.

After the server triggers the widget events on other clients associated with the widget event happening on the client, the server further detects whether the other clients are online and whether they are able to execute the associated events. If the clients are not online or they are unable to execute the events, the server invokes other online and capable clients to execute the widget applications, or the server executes the widget applications itself so that the widget applications are normally executed.

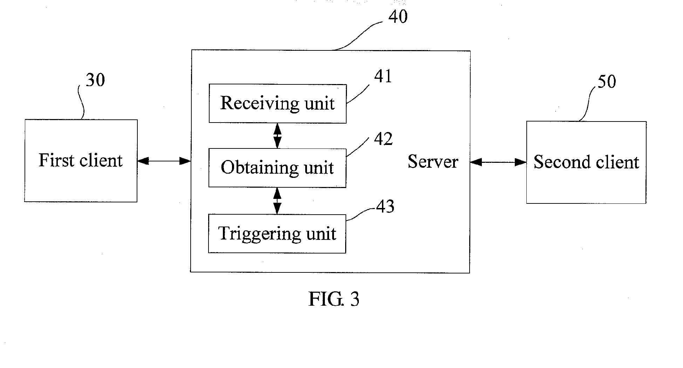

FIG. 3 shows a structure of a widget communication system according to the first embodiment of the present invention. The widget communication system includes a first client 30, a server 40 and a second client 50. The server 40 is connected to the first client 30 and the second client 50. The first client 30 and the second client 50 are exemplary only and they may be TV sets, sound devices, light devices, mobile phones and digital photo frames. The server 40 may be connected to more clients.

The server 40 includes a receiving unit 41, an obtaining unit 42 and a triggering unit 43.

The receiving unit 41 is adapted to receive a widget event message from the first client 30 or the second client 50. The widget event message indicates that the widget event has happened on the first client 30 or the second client 50.

The widget event includes a widget engine event and a widget application event. The widget engine event is defined as a signal initiated by a widget engine; for example, the widget engine controls the show or hide of a widget application icon, and the widget engine is going online, offline or exceptional. The widget application event is defined as a signal initiated by a widget application, for example, opening, shutdown or exception of a widget application, and change of a code variable in a widget application.

When a widget application happens on a client (such as the first client 30), the engine of the widget controls the widget icon to be shown and the client sends a widget event message indicating happening of the widget engine event that the widget icon is shown to the server 40. The server 40 receives the widget event message from the client. Suppose the client is a DVD enabled TV set. When the widget application of DVD play happens at the TV set, the DVD play widget icon is shown and a widget event message indicating the DVD play widget icon is shown is sent to the server 40.

The obtaining unit 42 is adapted to obtain association information of widget events between clients.

The association information of widget events means the associations of widget events between clients. The associations can be stored in the server 40 in advance in the form of a configuration file and the obtaining unit 42 of the server 40 parses the configuration file to obtain the association information of widget events. Optionally, the configuration file is stored in a storage device independent of the server 40, and the server 40 obtains the configuration file from the storage device when necessary and parses the configuration file to obtain the association information of widget events. It is understandable that the apparatus that stores and parses the configuration file is not limited to a server. It may also be another apparatus that is capable of storing and parsing the configuration file, such as a workstation and a personal computer.

It is understandable that the association information of widget events may also be present in the widget event message and the server extracts the association information of widget events from the widget event message upon reception of the widget event message from the client.

In this embodiment, a configuration file is taken as an example to explain the step of obtaining the association information of widget events between clients. The association configuration file is stored in the server 40 in advance, where a widget user may define widget applications running on every client (such as the first client 30 and the second client 50) and the associations between the widget applications according to the user requirement, such as association information between widget events of the widget applications.

The associations may be defined by manually compiling a widget script file such as linked.xml, or associations between widget applications can be defined by means of tables. The association information of widget events between clients is uploaded to the server via the association configuration file. An exemplary association configuration file is as follows:

```
        If(DVDOnTV_widget.show //engine event)
        {
          SoundOnTV_widget.show; //engine event
          LightOnTV_widget.open; //application event
         }
         If (DVDOnTV_widget.hide//engine event)
         {
           SoundOnTV_widget. hide; //engine event
           LightOnTV_ widget. hide; //engine event
         }
         If(CallNoteOnMobile_widget.open //application event)
         {
           CallNoteOnTV_widget.show; //engine event
           PhotosonPhotoframe_widget.open; //application event
         }
         If(CallNoteOnMobile_widget. answer //application event)
         {
           CallNoteOnTV_widget.hide; //engine event
         }
         If(CallNoteOnMobile_widget.close //application event)
         {
           PhotosOnPhotoframe_widget.close; //application event
         }
```

XOnY_widget indicates widget application X that runs on client Y. For example, DVDOnTV_widget is a widget application running on the first client 30 (TV). The SoundOnTV_widget and LightOnTV_ widget associated with DVDOnTV_widget are widget applications (such as sound and light) running on the second client 50.

In the configuration file, for example, DVDOnTV_widget.show is an engine event of DVDOnTV_widget on the first client 30 (TV), indicating the icon of DVDOnTV_widget is shown. Associated with the engine event of DVDOnTV_widget are the engine event SoundOnTV_widget.show of SoundOnTV_widget and the application event LightOnTV_ widget.open of LightOnTV_widget on the second client 50 (sound and light).

For example, CallNoteOnMobile_widget.open is an application event of CallNoteOnMobile_widget on the first client (mobile phone), indicating the CallNoteOnMobile_widget application is opened. Associated with CallNoteOnMobile_widget.open are the engine event CallNoteOnTV_widget.show of CallNoteOnTV_widget and the application event PhotosOnPhotoframe_widget.open of PhotosOnPhotoframe_widget on the second client 50 (sound and light).

CallNoteOnMobile_widget.answer is an application event of CallNoteOnMobile_widget on the first client 30 (mobile phone), indicating the call is answered via the mobile phone. Associated with CallNoteOnMobile_widget.answer is the engine event CallNoteOnTV_widget.hide of CallNoteOnTV_widget on the second client 50 (digital photo frame).

The triggering unit 43 is adapted to trigger the widget events on other clients that are associated with the widget event happening on the client according to the association information.

For example, when the receiving unit 41 receives a widget event message of DVDOnTV_widget.show from the first client 30 (TV), the triggering unit 43 triggers the widget engine event SoundOnTV_widget.show and widget application event LightOnTV_ widget.open on the second client 50 associated with the engine event DVDOnTV_widget.show according to the association information obtained by parsing the configuration file. Particularly, when the DVDOnTV_widget icon is shown on the TV, the SoundOnTV_widget icon is also shown and the LightOnTV_ widget application is opened.

When the receiving unit 41 receives a widget event message of CallNoteOnMobile_widget.open from the first client 30 (mobile phone), the triggering unit 43 triggers the widget engine event CallNoteOnTV_widget.show and application event PhotosOnPhotoframe_widget.open on the second client 50 (TV and digital photo frame) associated with CallNoteOnMobile_widget.open according to the association information obtained by parsing the configuration file. Particularly, when the CallNoteOnMobile_widget application is opened on the mobile phone, the CallNoteOnMobile_widget icon is shown on the TV and the PhotosOnPhotoframe_widget application is opened, for example, showing a photo of the caller.

When the receiving unit 41 receives a widget event message of CallNoteOnMobile_widget.answer from the first client 30 (mobile phone), the triggering unit 43 triggers the widget engine event CallNoteOnTV_widget.hide on the second client 50 (TV) associated with CallNoteOnMobile_widget.answer according to the association information obtained by parsing the configuration file. Particularly, when the user answers the call, the CallNoteOnMobile_widget icon is hidden from the TV.

In this embodiment, when the server receives a widget event message from a client, the server obtains the association information of widget events between clients. Because the association information of widget events between clients associates widget events of different clients, the server triggers the widget events on other clients that are associated with the widget event happening on the client according to the association information so that widget applications can collaborate across multiple clients.

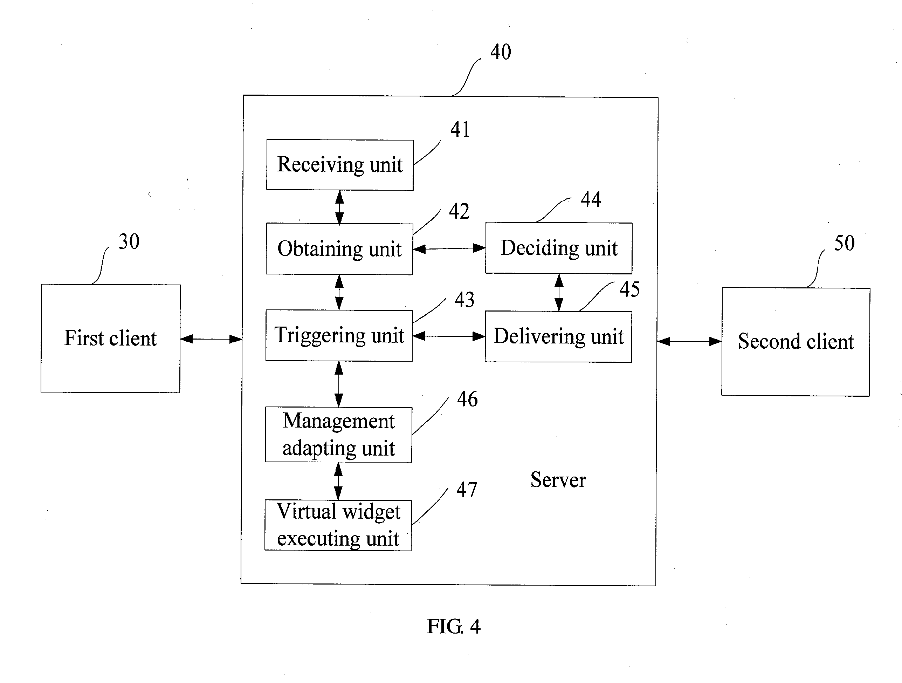

FIG. 4 shows a structure of a widget communication system according to the second embodiment of the present invention, which is different from the widget communication system in the first embodiment in that the server further includes a detecting unit 44 and a delivering unit 45.

The deciding unit 44 is adapted to detect whether widget applications associated with the widget application happening on the client exist on other clients.

The delivering unit 45 is adapted to deliver the widget applications associated with the widget application happening on the client to the other clients when the deciding unit 44 detects that widget applications associated with the widget application happening on the client do not exist on the other clients. Particularly, in this embodiment, the deciding unit 44 detects whether widget applications associated with the widget application happening on the first client 30 exist on the second client 50; and if such applications do not exist, the delivering unit 45 delivers the widget applications associated with the widget application happening on the first client 30 to the second client 50.

In this embodiment, when the server receives a widget event message from a client, the server obtains the association information of widget events between clients and triggers widget events on other clients associated with the widget event happening on the client so that widget applications can collaborate across multiple clients. In addition, when the server detects that widget applications associated with the widget application happening on the client do not exist on the other clients, the server delivers such widget applications to the other clients so that widget applications on the clients are normally triggered.

In another embodiment of the present invention, the server 40 further includes a management adapting unit 40, adapted to detect whether the clients where widget events should be triggered are online, and particularly, whether the second client 50 (such as a digital photo frame) is online, after the triggering unit 43 triggers the widget events on the other clients associated with the widget event happening on the client. If the other clients are not online, the management adapting unit 46 invokes other online clients. If the clients are online, the management adapting unit 46 further checks whether the clients where widget events should be triggered is able to execute the widget events. If the clients are unable to execute the widget events, the management adapting unit 46 invokes other online and capable clients to execute the widget events.

In still another embodiment of the present invention, the server 40 further includes a virtual widget executing unit 47, adapted to execute the widget events when the management adapting unit 46 detects that the clients where the widget applications should be triggered are unable to execute the widget events.

In this embodiment, when the server receives a widget event message from a client, the server obtains association information of widget events between clients by parsing the configuration file. Because the association information of widget events between clients associates widget events on different clients, the server triggers widget events on other clients associated with the widget event happening on the client according to the association information so that widget applications can collaborate across multiple clients. In addition, after the server triggers the widget applications associated with the widget application happening on the client, the server further detects whether the other clients are online and whether they are able to execute the associated widget events. When the other clients are not online or unable to execute the widget events, the server invokes other online and capable clients to execute the required widget applications, or the server executes the widget applications itself so that widget applications are normally executed.

In this embodiment, when the server receives a widget event message from a client, the server obtains association information of widget events between clients and triggers widget events on other clients associated with the widget event happening on the client according to the association information so that widget applications can collaborate across clients.

When the server detects that widget applications associated with the widget application happening on the client do not exist on the other clients, the server may deliver the associated widget applications to the other clients so that widget applications on the clients are normally triggered.

After the server triggers the widget events on other clients associated with the widget event happening on the client, the server further detects whether the other clients are online and whether they are able to execute the associated events. If the clients are not online or they are unable to execute the events, the server invokes other online and capable clients to execute the widget applications, or the server executes the widget applications itself so that the widget applications are normally executed.

It is understandable to those skilled in the art that all or part of the steps in the methods according to the preceding embodiments may be performed by hardware instructed by a program. The program may be stored in a computer readable storage medium, such as a Read-Only Memory (ROM), a Random Access Memory (RAM), a magnetic disk, and a compact disk.

Although the present invention has been described through several exemplary embodiments, the invention is not limited to such embodiments. It is apparent that those skilled in the art can make various modifications and variations to the invention without departing from the spirit and scope of the present invention. The invention is intended to cover the modifications and variations provided that they fall in the scope of protection defined by the following claims or their equivalents.

## Claims

1. A method for widget communication, comprising:
receiving a widget event message from a client, wherein the widget event message indicates happening of the widget event;
obtaining association information of widget events between clients; and
triggering widget events on other clients that are associated with the widget event happening on the client according to the association information.

2. The method of claim 1, wherein the obtaining step comprises parsing a configuration file to obtain the association information of widget events between clients.

3. The method of claim 1, wherein the widget event message comprises the association information of widget events between clients, and the obtaining association information of widget events between clients comprises extracting the association information of widget events from the widget event message.

4. The method of claim 1, wherein the widget event message comprises a widget engine event or a widget application event.

5. The method of claim 1, further comprising detecting whether there are widget applications on other clients that are associated with the widget application happening on the client; if associated widget applications do not exist on other clients, then delivering the widget applications associated with the widget application happening on the client to other clients.

6. The method of claim 1, further comprising detecting whether the clients which widget events need to be triggered are online; if the clients are not online, then invoking other online clients.

7. The method of claim 6, further comprising detecting whether the clients which widget events need to be triggered are able to execute the applications; if the clients which widget events need to be triggered are not able to execute the applications, then invoking other online and capable clients to execute the widget events.

8. A server for widget communication, comprising:
a receiving unit, adapted to receive a widget event message from a client, the widget event message indicates happening of the widget event;
an obtaining unit, adapted to obtain association information of widget events between clients; and
a triggering unit, adapted to trigger widget events on other clients that are associated with the widget event happening on the client according to the association information.

9. The method of claim 8, wherein the obtaining unit obtains the association information of widget events between clients by parsing a configuration file.

10. The server of claim 8, wherein the widget event message comprises the association information of widget events between clients, and the obtaining unit obtains the association information of widget events between clients by extracting the association information of widget events from the widget event message.

11. The server of claim 8, wherein the widget event message comprises a widget engine event or a widget application event.

12. The server of claim 8, further comprising a detecting unit and a delivering unit, wherein:
the detecting unit is adapted to detect whether there are widget applications on other clients that are associated with the widget application happening on the client, and
the delivering unit is adapted to deliver the widget applications associated with the widget application happening on the client to other clients if the detecting unit detects that the associated widget applications do not exist on other clients.

13. The server of claim 8, further comprising a management adapting unit, wherein
the management adapting unit is adapted to detect whether the clients where widget events should be triggered are online; if the other clients are not online, the management adapting unit invokes other online clients.

14. The server of claim 13, wherein the management adapting unit is further adapted to check whether the clients where widget events should be triggered are able to execute the widget events if the clients are online.

15. The server of claim 14, wherein the management adapting unit is further adapted to invoke other online and capable clients to execute the widget events if the clients where the widget applications should be triggered are unable to execute the widget events.

16. The server of claim 14, further comprising a virtual widget executing unit, adapted to execute the widget events when the management adapting unit detects that the clients where the widget applications should be triggered are unable to execute the widget events.
